# EUROPÄISCHE PATENTSCHRIFT

(11) **EP 3 729 015 B1**
(45) Veröffentlichungstag und Bekanntmachung des Hinweises auf die Patenterteilung: **08.05.2024**
(21) Anmeldenummer: 18803661.0
(22) Anmeldetag: 14.11.2018
(51) Int. Cl.: G01F 23/296, G01N 9/00, G01N 11/16

(54) **VIBRONISCHER SENSOR**
VIBRONIC SENSOR
CAPTEUR VIBRONIQUE

(30) Priorität: 19.12.2017 DE 102017130527
(43) Veröffentlichungstag der Anmeldung: 28.10.2020
(73) Patentinhaber: Endress+Hauser SE+Co. KG, 79689 Maulburg (DE)
(72) Erfinder: MACK, Benjamin, 79539 Lörrach (DE); BRENGARTNER, Tobias, 79312 Emmendingen (DE)
(74) Vertreter: Koslowski, Christine Adelheid
(86) Internationale Anmeldenummer: PCT/EP2018/081175
(87) Internationale Veröffentlichungsnummer: WO 2019/120768

(56) Entgegenhaltungen:
- EP-A2- 0 282 251
- EP-B2- 0 282 251
- DE-A1-102008 050 326
- DE-A1-102012 100 728
- DE-A1-102015 112 543
- US-A1- 2002 178 787

## Beschreibung

Die Erfindung betrifft eine Vorrichtung zur Bestimmung und/oder Überwachung von zumindest zwei Prozessgrößen eines Mediums in einem Behältnis. Bei der Prozessgröße handelt es sich beispielsweise um einen Füllstand, insbesondere einen Grenzstand, um die Dichte und/oder um die Viskosität des Mediums. Bei dem Behältnis kann es sich beispielsweise um einen Behälter oder um eine Rohrleitung handeln.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Wie beispielweise in der DE10050299A1 beschrieben, kann die Viskosität eines Mediums mittels eines vibronischen Sensors anhand der Frequenz-Phase-Kurve (Φ=g(ω)) bestimmt werden. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermitteln und entsprechend zu kompensieren. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind.

Durch die empirische Annahme, dass die Messung für eine bestimmte vorgebbare Phasenverschiebung unabhängig von der Viskosität ist, ergeben sich jedoch grundsätzliche Einschränkungen. Ab einer bestimmten Viskosität kann anhand der beschriebenen Messprinzipien keine genaue Messung der Dichte mehr gewährleistet werden. So muss für jedes Medium muss eine maximal zulässige Viskosität bestimmt werden, bis zu welcher die Dichtebestimmung durchgeführt werden soll. Um dieser Problematik zu entgehen sind aus dem Dokument DE102015102834A1 ein vibronischer Sensor sowie ein Verfahren zu dessen Betrieb bekannt geworden, mittels welchem die Dichte und/oder die Viskosität in einem erweiterten Anwendungsbereich bestimmbar sind. Das dort vorgeschlagene analytische Messprinzip berücksichtigt die Interaktionen zwischen der schwingfähigen Einheit und dem Medium. Der Sensor wird bei zwei verschiedenen vorgebbaren Phasenverschiebungen betrieben und aus dem jeweiligen Antwortsignal die Prozessgrößen Dichte und/oder Viskosität ermittelt.

In der bisher unveröffentlichten deutschen Patentanmeldung mit dem Aktenzeichen 102016112743.4 ist es ferner beschrieben, aus dem Empfangssignal des vibronischen Sensors bei Vorliegen der vorgebbaren Phasenverschiebung eine Dämpfung und/oder eine von der Dämpfung abhängigen Größe zu bestimmen, und zumindest aus der Dämpfung und/oder einer von der Dämpfung abhängigen Größe, und aus der Frequenz des Anregesignals die Dichte und/oder die

Viskosität des Mediums zu ermitteln.

Die DE102012100728A1 betrifft einen vibronischen Sensor, bei welchem zwei piezoelektrische Elemente in die Gabelzinken der schwingfähigen Einheit eingebracht sind.

Die DE102015112543A1 betrifft einen Multisensor mit einer mechanisch schwingfähigen Einheit und einer elektromagnetisch schwingfähigen Einheit, welche in/an der mechanisch schwingfähigen Einheit angeordnet ist. Die mechanisch schwingfähige Einheit in Form einer Schwinggabel wird über eine Antriebs-/Empfangseinheit mit einem Anregesignal angeregt.

Die DE102008050326A1 offenbart ein Messgerät mit zwei Schwinggabeln. In einer Testphase ist die erste Schwinggabel aktiv und in einem aktiven Betrieb ist die zweite Schwinggabel aktiv.

Die EP0282251A2 beschreibt schließlich einen vibronischen Sensor, bei welchem Mittel zur Anregung und Detektion von Schwingungen der Schwinggabel in den Gabelzinken eingebracht sind. Ausgehend vom Stand der Technik liegt der vorliegenden Erfindung die Aufgabe zugrunde, einen vibronischen Sensor mit einer hohen Messgenauigkeit und einem erweiterten Anwendungsbereich bereitzustellen.

Diese Aufgabe wird gelöst durch eine Vorrichtung mit den Merkmalen des ersten Anspruchs.

Die Idee der vorliegenden Erfindung besteht darin, zumindest zwei Schwingelemente getrennt voneinander zu mechanischen Schwingungen anzuregen, und die Schwingungen der Schwingelemente separat zu empfangen. Die getrennte Auswertung der Empfangssignale des ersten und zweiten Schwingelements erlaubt eine umfassende Auswertung des Schwingungsverhaltens des Sensors hinsichtlich der zumindest einen Prozessgröße. Wird beispielsweise ein vibronischer Sensor mit einer schwingfähigen Einheit in Form einer Schwinggabel verwendet, ist das jeweils empfangene Empfangssignal stets eine Superposition der Schwingungen der beiden Schwingstäbe der schwingfähigen Einheit. Eine getrennte Auswertung der Schwingungsbewegungen der beiden die Schwinggabel bildenden Schwingstäbe ist insbesondere deshalb nicht möglich, weil die beiden Schwingstäbe gemeinsam mittels einer Membran, auf welcher sie befestigt sind, gemeinsam zu Schwingungen angeregt werden.

Vorteilhaft können die beiden Schwingelemente sowohl gleich als auch auf unterschiedliche Art und Weise zu mechanischen Schwingungen angeregt werden. Die Schwingungen der beiden Schwingstäbe können sich beispielsweise hinsichtlich ihrer Amplitude, der Phasenverschiebung zwischen dem jeweiligen Anregesignal und Empfangssignal oder bezüglich ihrer Frequenz unterscheiden. Auch können unterschiedliche Schwingungsmoden, unterschiedliche Schwingungsformen, oder auch unterschiedliche Schwingungsrichtungen in den zumindest zwei Schwingstäben erzeugt werden.

In einer Ausgestaltung des erfindungsgemäßen vibronischen Sensors handelt es sich bei der Prozessgröße um einen vorgebbaren Füllstand, die Dichte oder die Viskosität des Mediums. Erfindungsgemäß ist die Elektronik dazu ausgestaltet, anhand des ersten Empfangssignals eine erste Prozessgröße und anhand des zweiten Empfangssignals eine zweite Prozessgröße zu bestimmen. Mit dem erfindungsgemäßen vibronischen Sensor lassen sich also, insbesondere unbeeinflusst voneinander, zwei Prozessgrößen im Wesentlichen zeitgleich bestimmen.

Alternativ kann auch mittels beider Empfangssignale dieselbe Prozessgröße bestimmt werden. In diesem Falle ist es möglich, die Prozessgröße auf unterschiedliche Weisen zu bestimmen. Dies ist insbesondere vorteilhaft bezüglich der erzielbaren Messgenauigkeit. Durch die Implementierung zweier unterschiedlicher Messprinzipien zur Bestimmung einer Prozessgröße mittels des ersten bzw. zweiten Schwingelements kann beispielsweise medienabhängig das jeweils am besten geeignete Messprinzip und damit einhergehend das jeweilige Schwingelement gewählt werden. Es ist von Vorteil, wenn die Elektronikeinheit ferner dazu ausgestaltet ist, anhand des ersten und/oder zweiten Empfangssignals auf das Vorliegen eines Ansatzes an zumindest einem der Schwingelemente zu schließen. Mit Hinblick auf die Detektion von Ansatz sei auf das Dokument DE102004080494A1 verwiesen.

**Dort ist** beschrieben, eine mechanisch schwingfähige Einheit in Form einer Schwinggabel in zwei unterschiedlichen Schwingungsmodi anzuregen, wobei eine der beiden Schwingungsmoden derart gewählt ist, dass sie unabhängig vom jeweiligen Medium ist, in welches die schwingfähige Einheit zumindest teilweise und/oder zeitweise eintaucht. Auf die vorliegende Erfindung übertragen wäre somit eine Anregung der ersten Schwingungsmode für das erste Schwingelement und eine Anregung der zweiten Schwingungsmode für das zweite Schwingelement denkbar. Vorteilhaft kann simultan zur Bestimmung und/oder Überwachung der jeweiligen Prozessgröße eine Detektion von möglicherweise vorhandenem Ansatz vorgenommen werden.

Die zumindest zwei Schwingelemente können einerseits identisch ausgestaltet sein. Sie können aber auch unterschiedlich ausgestaltet sein. Dies betrifft insbesondere die Dimensionierung bzw. Geometrie der Schwingelemente. Ebenfalls können die beiden Schwingelemente auf unterschiedlichste Arten und Weisen relativ zu zumindest einer weiteren Komponente der Vorrichtung angeordnet sein. Beispielsweise können die beiden Schwingelemente symmetrisch zueinander oder symmetrisch bezüglich zumindest einer weiteren Komponente der Vorrichtung angeordnet sein. Sind die zumindest zwei Schwingelemente beispielsweise, insbesondere einseitig, auf einem scheibenförmigen Element befestigt, so können sie beispielsweise symmetrisch um den Mittelpunkt des scheibenförmigen Elements angeordnet sein.

In einer Ausgestaltung ist zumindest das erste oder zweite Schwingelement, vorzugsweise beide Schwingelemente, an einem, vorzugsweise demselben, scheibenförmigen Element angebracht. Dieses scheibenförmige Element dient für die vorliegende Erfindung nicht als Membran, sondern lediglich zur Befestigung der Schwingelemente. Aber auch andere Befestigungsweisen der zumindest zwei Schwingelemente an zumindest einer Komponente der Vorrichtung sind denkbar und fallen unter die vorliegende Erfindung.

Durch eine gezielte Wahl der Geometrie und/oder der Anordnung der Schwingelemente kann die jeweilige Interaktion mit dem Medium gezielt beeinflusst werden. In dieser Hinsicht sind verschiedenste Ausgestaltungen denkbar, welche allesamt unter die vorliegende Erfindung fallen. Die nachfolgend beschriebenen Ausgestaltungen sind als besonders bevorzugte Beispiele anzusehen, welche keineswegs eine abgeschlossene Menge an möglichen Ausgestaltungen bilden.

Bezüglich der Geometrie der zumindest zwei Schwingelemente sieht eine Ausgestaltung der erfindungsgemäßen Vorrichtung vor, dass zumindest das erste oder das zweite Schwingelement stabförmig ausgestaltet ist. Es handelt sich bei zumindest einem der beiden Schwingelemente also um ein stabförmiges Element mit vorgebbarer Länge sowie vorgebbarer Form und/oder Größe der Grundfläche. Die Länge des Schwingelements ist bevorzugt derart gewählt, dass zumindest teilweise und/oder zeitweise ein Kontakt mit dem jeweiligen Medium stattfindet. Im Falle, dass es sich bei der zumindest einen Prozessgröße um die Dichte und/oder die Viskosität handelt, ist zumindest zeitweise eine vollständige Bedeckung der Schwingelemente mit dem jeweiligen Medium erforderlich.

Eine weitere bevorzugte Ausgestaltung der erfindungsgemäßen Vorrichtung beinhaltet, dass an dem ersten oder zweiten Schwingelement endseitig ein Paddel angeformt ist.

Noch eine weitere bevorzugte Ausgestaltung der erfindungsgemäßen Vorrichtung beinhaltet, dass eine Grundfläche zumindest des ersten oder zweiten Schwingelements senkrecht zu einer Längsachse durch das Schwingelement derart ausgestaltet ist, dass eine Grundseite der Grundfläche länger ist als eine Höhe der Grundfläche. Mit anderen Worten: die Länge der Grundfläche bzw. Querschnittsfläche ist größer als die Breite dieser Fläche.

In dieser Hinsicht ist es von Vorteil, wenn die Grundfläche rechteckig, rechteckig mit abgerundeten Ecken, oval oder elliptisch ausgestaltet ist.

Neben der Geometrie und Anordnung der Schwingelemente spielt auch die Ausgestaltung und Anordnung der Antriebs-/Empfangseinheiten eine entscheidende Rolle. Vibronische Sensoren werden üblicherweise zu Resonanzschwingungen einer vorgebbaren Schwingungsmode angeregt. Neben solchen Schwingungen, bei welchem die Schwingungsbewegung, zumindest des Schwerpunktes der schwingfähigen Einheit, im Wesentlichen in einer Ebene verlaufen, ist beispielsweise auch die Anregung von Torsionsschwingungen bekannt geworden. So kann beispielsweise ein stabförmiges Schwingelement mit einer Grundfläche in verschiedenen Ebenen relativ zur Grundseite der Grundfläche schwingen, beispielsweise parallel oder senkrecht dazu.

Es ist beispielsweise einerseits denkbar, die zumindest zwei Schwingelemente beide jeweils zu Schwingungen in einer Ebene, in unterschiedlichen Ebenen, oder auch beide zu Torsionsschwingungen anzuregen. Ebenso ist es möglich, jeweils ein Schwingelement zu Torsionsschwingungen und das jeweils andere Schwingelement zu Schwingungen in einer Ebene anzuregen, oder die beiden Schwingelemente zu Schwingungen in unterschiedlichen Ebenen anzuregen.

Erfindungsgemäß ist vorgesehen, dass das erste Schwingelement und/oder die erste Antriebs-/Empfangseinheit derart angeordnet und/oder ausgestaltet sind, dass das erste Schwingelement Schwingungen in einer ersten vorgebbaren, insbesondere gedachten, Ebene ausführt, dass das zweite Schwingelement und/oder die zweite Antriebs-/Empfangseinheit derart angeordnet und/oder ausgestaltet sind, dass das zweite Schwingelement Schwingungen in einer zweiten vorgebbaren, insbesondere gedachten, Ebene ausführt, und dass die erste und die zweite Ebene einen ersten vorgebbaren Winkel zueinander aufweisen. Die Schwingungsrichtungen des ersten und zweiten Schwingelements sind also gemäß dieser Ausgestaltung unterschiedlich. Die beiden Antriebseinheiten sind dann beispielsweise jeweils passend zur Erzeugung von Schwingungen der Schwingelemente in den beiden Ebenen ausgestaltet.

Dabei ist es von Vorteil, wenn der erste vorgebbare Winkel 90° beträgt. Die beiden Schwingelemente schwingen dann senkrecht zueinander.

Es ist ebenso von Vorteil, wenn das erste und das zweite Schwingelement gleich ausgestaltet und/oder symmetrisch zueinander angeordnet sind.

Im Falle einer gleichen, insbesondere stabförmigen Ausgestaltung der beiden Schwingelemente mit jeweils gleicher Grundfläche verlaufen dann beispielsweise die beiden Grundseiten der Grundflächen parallel zueinander, insbesondere in derselben Ebene. Beispielsweise können die beiden Schwingelemente einander gegenüberliegend positioniert werden. Beträgt ferner der erste vorgebbare Winkel 90°, so verläuft die erste Ebene parallel zur Grundseite der Grundfläche und die zweite Ebene senkrecht zur Grundseite der Grundfläche.

Durch diese Ausgestaltung wird erreicht, dass das erste Schwingelement eine erhöhte Sensitivität bezüglich der Dichte des Mediums aufweist, während das zweite Schwingelement eine erhöhte Sensitivität bezüglich der Viskosität des Mediums aufweist.

Das erste Schwingelement schwingt senkrecht zur Grundseite der Grundfläche. Die Interaktion des ersten Schwingelements wird also bezüglich einer zwischen dem Schwingelement und dem Medium wirkenden Druckkraft maximiert, welche wiederum von der Dichte des Mediums abhängt. Das zweite Schwingelement schwingt dagegen parallel zur Grundseite der Grundfläche. Zwischen der Grundseite der Grundfläche und dem Medium wird hier eine wirkende Reibungskraft maximiert, welche wiederum von der Viskosität des Mediums abhängt. Bezüglich der Herleitung der wirkenden Druckkraft und Reibungskraft sei nochmals auf das Dokument DE102015102834A1 verwiesen, wo die Schwingungsbewegungen eines vibronischen Sensors anhand eines analytischen Modells beschrieben sind. Dort werden ebenfalls die Interaktionskräfte zwischen dem Sensor und dem Medium thematisiert, insbesondere die erwähnte Druckkraft und Reibungskraft.

Erfindungsgemäß sind das erste Schwingelement und/oder die erste Antriebs-/Empfangseinheit und das zweite Schwingelement und/oder die zweite Antriebs-/Empfangseinheit derart angeordnet und/oder ausgestaltet, dass das erste und zweite Schwingelement Schwingungen in einer vorgebbaren, insbesondere gedachten, dritten Ebene ausführen. Beide Schwingelemente führen hier Schwingungen in derselben Ebene aus.

Hierbei ist es insbesondere von Vorteil, wenn zumindest das erste und das zweite Schwingelement unterschiedlich ausgestaltet sind, oder wenn die beiden Schwingelemente unterschiedlich relativ zu zumindest einer weiteren Komponente der Vorrichtung angeordnet sind. In dieser Ausgestaltung kann die jeweilige Interaktion mit dem Medium also insbesondere durch die unterschiedliche Anordnung und/oder Ausgestaltung der beiden Schwingelemente beeinflusst werden. Die beiden Antriebs-/Empfangseinheiten können dabei sowohl gleich als auch unterschiedlich ausgestaltet sein.

Im Falle einer stabförmigen Ausgestaltung der beiden Schwingelemente mit gleicher Grundfläche weisen beispielsweise die beiden Grundseiten der Grundflächen einen zweiten vorgebbaren Winkel zueinander auf. Der zweite vorgebbare Winkel kann beispielsweise 90° betragen, so dass bei gleich ausgestalten Antriebs-/Empfangseinheiten beim ersten Schwingelement die Grundseite der Grundfläche parallel zur Schwingungsrichtung, also zu dritten Ebene, verläuft, während beim zweiten Schwingungselement die Grundseite der Grundfläche senkrecht zur Schwingungsrichtung verläuft. Auch für diese beispielhafte Ausgestaltung weist also das erste Schwingelement eine erhöhte Sensitivität bezüglich der Dichte des Mediums auf, während das zweite Schwingelement eine erhöhte Sensitivität bezüglich der Viskosität des Mediums aufweist.

Eine Ausgestaltung der erfindungsgemäßen Vorrichtung beinhaltet, dass zumindest das erste oder zweite Schwingelement einen Hohlraum aufweist, wobei zumindest die erste oder zweite Antriebs-/Empfangseinheit zumindest teilweise innerhalb des Hohlraums angeordnet ist. Bezüglich dieser Ausgestaltung sei insbesondere auf das Dokument DE102012100728A1 verwiesen.

Eine weitere Ausgestaltung beinhaltet, dass zumindest das erste oder zweite Schwingelement, vorzugsweise beide Schwingelemente, an einem, vorzugsweise demselben, scheibenförmigen Element angebracht ist/sind.

In einer besonders bevorzugten Ausgestaltung umfasst die Vorrichtung zumindest vier Schwingelemente. Hier sind verschiedene Möglichkeiten denkbar. Einerseits kann jedes der vier Schwingelemente einzeln zu Schwingungen angeregt werden und die Schwingungen können auch einzeln detektiert und ausgewertet werden. In diesem Falle umfasst die Vorrichtung bevorzugt ebenfalls vier Antriebs-/Empfangseinheiten. Es ist aber ebenfalls denkbar, jeweils zwei Schwingelemente zu einem Paar von Schwingelementen, ähnlich einer aus dem Stand der Technik bekannten Schwinggabel, zusammenzufassen. Die beiden Schwingelemente jedes Paares können dann beispielsweise identisch ausgestaltet und/oder symmetrisch zueinander ausgestaltet sein. Einerseits kann eine Antriebs-/Empfangseinheit für je ein Paar von Schwingelementen verwendet werden. Es können aber auch trotzdem vier einzelne Antriebs-/Empfangseinheiten verwendet werden.

Bezüglich einer erfindungsgemäßen Vorrichtung mit vier Schwingelementen sieht eine bevorzugte Ausgestaltung vor, dass jeweils zwei Schwingelemente gleich ausgestaltet und symmetrisch zueinander angeordnet sind, insbesondere wobei das erste und ein drittes Schwingelement bzw. das zweite und ein viertes Schwingelement gleich ausgestaltet und symmetrisch zueinander angeordnet sind. Durch die paarweise symmetrische Anordnung kann eine Kraftübertragung von den Schwingelementen auf weitere Komponenten der Vorrichtung vorteilhaft minimiert werden. Die Vorrichtung ist auf diese Weise also bestmöglich von einem Prozessanschluss des jeweiligen Behältnisses für das Medium entkoppelt.

Im Falle der Befestigung der vier Schwingelemente an einem scheibenförmigen Element ist es dann von Vorteil, wenn je zwei Schwingelemente paarweise einander gegenüberliegend im gleichen Abstand zum Mittelpunkt des scheibenförmigen Elements angeordnet sind, insbesondere wenn das erste und dritte Schwingelement einander gegenüberliegend im gleichen Abstand zum Mittelpunkt des scheibenförmigen Elements und das zweite und vierte Schwingelement einander gegenüberliegend im gleichen Abstand zum Mittelpunkt des scheibenförmigen Elements angeordnet sind.

Die Erfindung sowie ihre vorteilhaften Ausgestaltungen werden nachfolgend anhand der Figuren Fig. 1 - Fig. 3 näher beschrieben. Es zeigt:
Fig. 1: eine schematische Skizze eines vibronischen Sensors gemäß Stand der Technik,
Fig. 2: eine schematische Zeichnung einer Schwinggabel,
Fig. 3 eine erfindungsgemäße Vorrichtung mit zwei Schwingelementen,
Fig. 4 eine erfindungsgemäße Vorrichtung mit drei Schwingelementen, und
Fig. 5 zwei unterschiedliche Ausgestaltungen für erfindungsgemäße Vorrichtungen mit vier Schwingelementen.

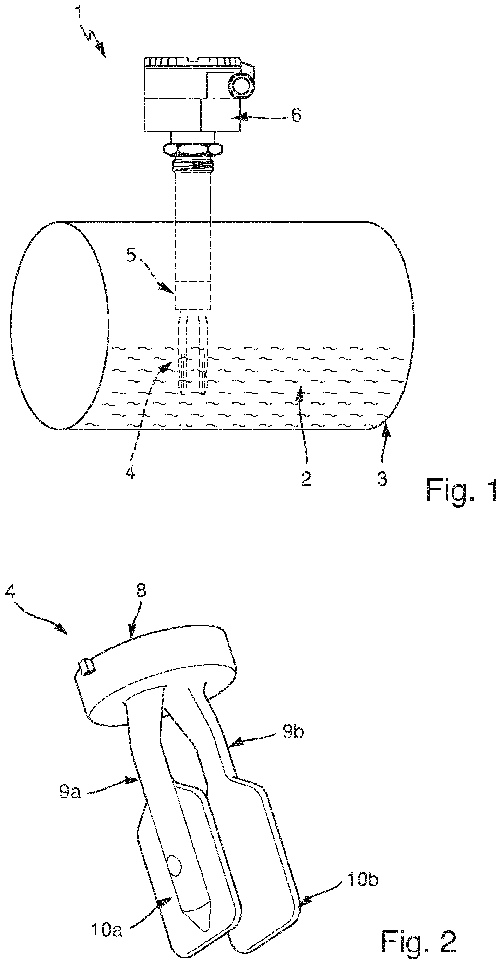

In Fig. 1 ist ein vibronischer Sensor 1 gezeigt. Der Sensor verfügt über eine mechanisch schwingfähige Einheit 4 in Form einer Schwinggabel, welche teilweise in ein Medium 2 eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, gezeigt. Die Schwinggabel 4 umfasst zwei an einer Membran 8 angebrachte Schwingstäbe 9a,9b, an welchen endseitig je ein Paddel 10a, 10b angeformt ist. Diese werden mithin auch als Gabelzinken bezeichnet. Auf der den Schwingstäben 9a,9b abgewandten Seite der Membran 8 ist die Antriebs-/Empfangseinheit 5 mittels einer stoffschlüssigen und/oder kraftschlüssigen Verbindung befestigt. Für die gezeigte beispielhafte Ausgestaltung sei angenommen, dass die Antriebs-/Empfangseinheit 5 zumindest ein piezoelektrisches Element umfasst. Im fortlaufenden Betrieb wird der Membran 8 über das Anlegen eines Anregesignals U_{A}, beispielweise in Form einer elektrischen Wechselspannung, welche in der Elektronikeinheit 6 generiert wird, eine Kraft aufgeprägt. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements derart, dass das Anlegen einer elektrischen Wechselspannung als Anregesignal U_{A} zu einer Schwingung der stoffschlüssig mit der Antriebs-/Empfangseinheit 5 verbundenen Membran 8, und damit einhergehend der mechanisch schwingfähigen Einheit 4, hervorruft.

Die Idee der vorliegenden Erfindung besteht nun darin, einen vibronischen Sensor 1 mit zumindest zwei Schwingelementen 11a, 11b bereitzustellen, welche getrennt voneinander zu mechanischen Schwingungen anregbar sind, und wobei die Schwingungen der beiden Schwingelemente 11a, 11b ebenfalls getrennt voneinander empfangen und ausgewertet werden können. Dies bedeutet, dass das erste Schwingelement 11a mittels eines ersten Anregesignals U_{A1} und das zweite Schwingelement 11b mittels eines zweiten Anregesignals U_{A1} zu Schwingungen angeregt werden, und dass vom ersten Schwingelement 11a ein erstes U_{E1} und vom zweiten Schwingelement 11b ein zweites Empfangssignal U_{E2} empfangen werden. Die beiden Anregesignale U_{A1} und U_{A2} können gleich oder auch verschieden sein. Bei mehr als zwei Schwingelementen 11a-11x reicht es wenn zumindest zwei der Schwingelemente getrennt voneinander anregbar sind und die Schwingungen getrennt voneinander detektierbar und auswertbar sind.

Die getrennte Auswertung der Empfangssignale U_{E1} und U_{E2} des ersten 11a und zweiten Schwingelements 11b erlaubt nämlich eine umfassende Auswertung des Schwingungsverhaltens des Sensors 1 hinsichtlich der zumindest einen Prozessgröße. Bei einem herkömmlichen vibronischen Sensor 1, wie in Fig. 1 und Fig. 2 dargestellt, ist das jeweils empfangene Empfangssignal stets eine Superposition der Schwingungen der beiden Schwingstäbe 9a, 9b der Schwinggabel 4. Dies liegt insbesondere daran, dass die beiden Schwingstäbe 9a, 9b gemeinsam mittels der Membran 5, an welcher stoffschlüssig die Antriebs-/Empfangseinheit befestigt ist, zu Schwingungen angeregt werden.

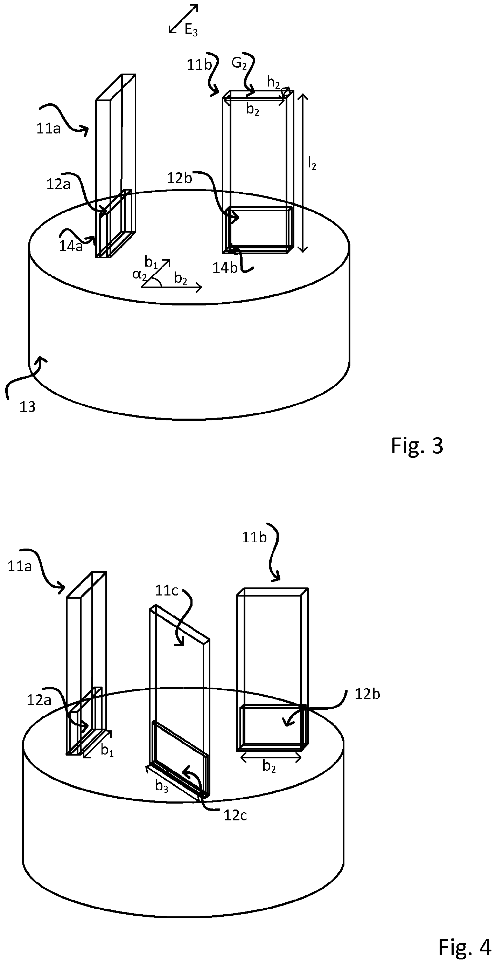

Eine erste beispielhafte Ausgestaltung der vorliegenden Erfindung ist in schematischer Darstellung in Fig. 3 gezeigt. Der vibronische Sensor 1 weist ein erstes 11a und ein zweites Schwingelement 11b, sowie eine erste 12a und eine zweite Antriebs-/Empfangseinheit 12b auf. Die beiden Schwingstäbe 11a und 11b sind auf einem scheibenförmigen Element 13 befestigt. Beide Schwingstäbe 11a und 11b weisen jeweils einen Hohlraum 14a und 14b auf, in welchen im dem scheibenförmigen Element 13 zugewandten Bereich jeweils eine Antriebs-/Empfangseinheit 12a und 12b angeordnet ist.

Jedes der beiden Schwingelemente 11a, 11b ist stabförmig ausgestaltet. Der Übersicht halber sind die folgenden Bezugszeichen nur für das zweite Schwingelement 11b eingezeichnet. Der Stab des zweiten Schwingelements 11b hat eine Länge l₂ und eine rechteckige Grundfläche G₂ mit Grundseite b₂ und Höhe h₂. Die Grundseite b₂ ist länger als die Höhe h₂. Durch die Wahl einer Grundfläche G₂, bei der eine Grundseite b₂ länger ist als eine Höhe h₂, lässt sich die jeweilige Interaktion mit dem Medium 2 gezielt beeinflussen. Wie bereits beschrieben, sind neben der gezeigten rechteckförmigen Ausgestaltung der Grundfläche G₂ zahlreiche weitere Möglichkeiten denkbar, welche ebenfalls unter die vorliegende Erfindung fallen.

Das erste 11a und zweite Schwingelement 11b sind ferner unterschiedlich relativ zum scheibenförmigen Element 13 angeordnet. Im gezeigten Beispiel weisen die beiden Grundseiten b₁ und b₂ der beiden Schwingelemente 11a und 11b einen zweiten vorgebbaren Winkel α₂ in Form eines rechten Winkels zueinander auf. Beide Schwingelemente 11a und 11b werden zu Schwingungen in der gleichen, dritten Ebene Es angeregt. Dies führt dazu, dass für das erste Schwingelement die Grundseite b₁ parallel zur dritten Ebene Es, und damit parallel zur Schwingungsrichtung, verläuft, während beim zweiten Schwingelement 11b die Grundseite b₂ senkrecht zur dritten Ebene, und damit senkrecht zur Schwingungsrichtung verläuft. Deshalb wird die Interaktion des ersten Schwingelements 11a und dem Medium 2 durch eine Reibungskraft zwischen der durch die Grundseite b₁ und Länge l₁ gebildete Fläche und dem Medium 2 dominiert, während die Interaktion des zweiten Schwingelements 11b und dem Medium 2 durch eine Druckkraft zwischen der durch die Grundseite b₂ und Länge t₂ gebildete Fläche und dem Medium 2 dominiert wird. Mittels des ersten Schwingelements 11a lässt sich also bevorzugt die Viskosität η des Mediums 2 bestimmen, während das zweite Schwingelement eine erhöhte Sensitivität bezüglich der Dichte ρ des Mediums 2 aufweist.

Eine zweite beispielhafte Ausgestaltung der vorliegenden Erfindung ist in Fig. 4 gezeigt. Auf im Zusammenhang mit bereits erläuterten Bezugszeichen wird für die nachfolgenden Figuren jeweils nicht erneut im Detail eingegangen. Der in Fig. 4 skizzierte Sensor weist neben einem erstes 11a und zweiten Schwingelement 11b, welche wie in Fig. 3 ausgestaltet und angeordnet sind, ein drittes Schwingelement 11c sowie eine dritte Antriebs-/Empfangseinheit 12c auf. Das dritte Schwingelement 11c ist identisch zu den ersten beiden Schwingelementen 11a und 11b ausgestaltet. Allerdings ist das dritte Schwingelement 11c so relativ zu den ersten beiden Schwingelementen 11a und 11b angeordnet, dass die Grundseite g3 des dritten Schwingelements zum ersten 11a und zweiten Schwingelement 11b jeweils einen Winkel von 45° aufweist.

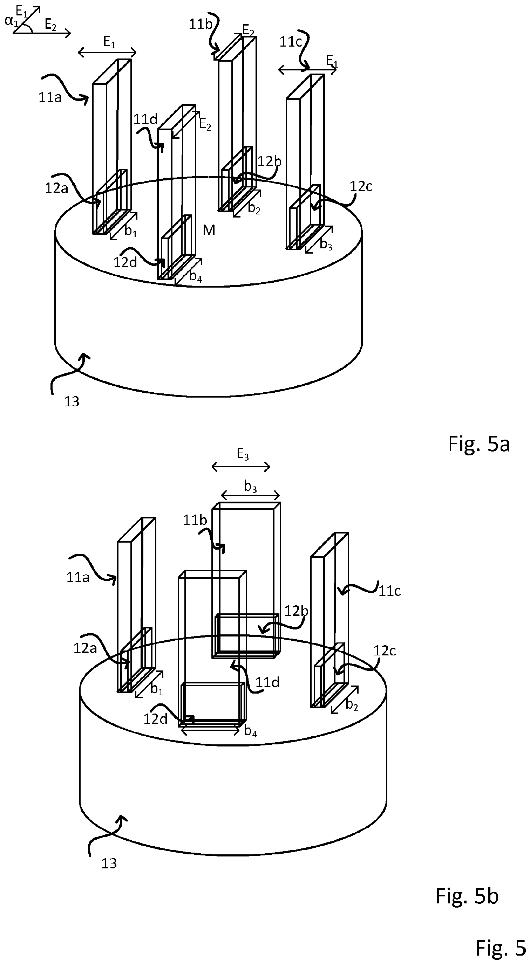

In Fig. 5 sind schließlich zwei unterschiedliche Ausgestaltung für erfindungsgemäße Sensoren1 mit jeweils vier Schwingelementen 11a-11d und vier Antriebs-/Empfangseinheiten 12a-12d gezeigt. In Fig. 5a sind alle vier Schwingelemente 11a-11d gleich ausgestaltet. Die Grundseiten b₁-b₄ der vier Schwingelemente 11a-11d verlaufen parallel zueinander. Die Schwingelemente 11a-11d sind jeweils paarweise im gleichen Abstand zum Mittelpunkt M des scheibenförmigen Elements 13 positioniert. Ein erstes Paar wird dabei hier durch das erste 11a und dritte Schwingelement 11c gebildet, und ein zweites Paar vom zweiten 11b und vierten Schwingelement 11d. Das erste Paar Schwingelemente 11a und 11c wird zu Schwingungen in einer ersten Ebene E₁ angeregt, während das zweite Paar Schwingelemente 11b und 11d zu Schwingungen in einer zweiten Ebene E₂ angeregt wird. Die beiden Ebenen weisen einen ersten vorgebbaren Winkel α₁ zueinander auf, welcher im vorliegenden Beispiel 90° beträgt. Zu diesem Zweck sind die nur schematisch eingezeichneten Antriebs-Empfangseinheiten 12a-12d passend zur Erzeugung von Schwingungen in den beiden Ebenen E₁ und E₂ ausgestaltet.

Gemäß Fig. 5a verläuft beim ersten Paar 11a, 11c jeweils die Grundseite b₁, b₃ der Grundflächen G₁, G₃ der Schwingelemente 11a, 11c senkrecht zur Ebene E₁, also senkrecht zur Schwingungsrichtung, während beim zweiten Paar 11b, 11d jeweils die Grundseite b₂, b₄ der Grundflächen G₂, G₄ der Schwingelemente 11b, 11d parallel zur Ebene E₂, also parallel zur Schwingungsrichtung, verläuft. Mit dem ersten Paar 11a, 11c lässt sich also bevorzugt die Dichte ρ des Mediums 2 bestimmen, und mit dem zweiten Paar 11b, 11d die Viskosität η.

In Fig. 5b sind ebenfalls alle vier Schwingelemente 11a-11d gleich ausgestaltet. Wieder wird ein erstes Paar Schwingelemente durch das erste 11a und dritte Schwingelement 11c, und ein zweites Paar vom zweiten 11b und vierten Schwingelement 11d gebildet. Die beiden Grundseiten b₁ und b₃ des ersten Paares verlaufen parallel zueinander, wobei das erste 11a und dritte Schwingelement 11c einander gegenüberliegend im gleichen Abstand zum Mittelpunkt M [in Fig. 5b nicht eingezeichnet] des scheibenförmigen Elements 13 angeordnet sind. Auch die beiden Grundseiten b₂ und b₄ des zweiten Paares verlaufen parallel zueinander, wobei das zweite 11b und vierte Schwingelement 11d ebenfalls einander gegenüberliegend im gleichen Abstand zum Mittelpunkt M [in Fig. 5b nicht eingezeichnet] des scheibenförmigen Elements 13 angeordnet sind. Die Grundseiten b₁, b₃ des ersten Paares 11a, 11c und die Grundseiten b₂, b₄ des zweiten Paares 11b, 11d weisen also, ähnlich wie in Fig. 3, einen zweiten vorgebbaren Winkel α₂ von 90° zueinander auf. Alle Schwingelemente 11a-11d werden zu Schwingungen in der gleichen, dritten Ebene Es angeregt. Dies führt dazu, dass für das erste Paar Schwingelemente 11a,11c die Grundseiten b₁ und b₃ senkrecht zur dritten Ebene Es, und damit parallel zur Schwingungsrichtung, verlaufen, während beim zweiten Paar Schwingelemente 11b die Grundseiten b₂ und b₄ parallel zur dritten Ebene Es, und damit senkrecht zur Schwingungsrichtung verlaufen. Entsprechend ist es von Vorteil, mittels des ersten Paares von Schwingelementen 11a und 11c die Dichte δ und mittels des zweiten Paares 11b und 11d die Viskosität η des Mediums 2 zu bestimmen und/oder zu überwachen.

Es sei darauf verwiesen, dass die in den Figuren gezeigten Ausgestaltungen nur als einige mögliche Beispiele zu verstehen sind. Die Erfindung erlaubt eine Vielzahl weiterer Ausgestaltungen, welche hier nicht allesamt gezeigt werden können.

### Bezugszeichenliste

- 1: Vibronischer Sensor
- 2: Medium
- 3: Behältnis
- 4: Schwingfähige Einheit
- 5: Antriebs-/Empfangseinheit
- 6: Elektronikeinheit
- 8: Membran
- 9: Schwingstäbe
- 10: Paddel
- 11a-11d: Schwingelemente
- 12a-12d: Antriebs-/Empfangseinheiten
- 13: scheibenförmiges Element
- 14a,14b: Hohlräume in den Schwingelementen

- U_{A}: Anregesignal
- U_{E}: Empfangssignal
- ΔΦ: vorgebbare Phasenverschiebung
- ρ: Dichte des Mediums
- v: Viskosität des Mediums
- l₁-l₄: Länge der Schwingelemente
- G, G₁-G₄: Grundflächen der Schwingelemente
- b, b₁-b₄: Grundseiten der Schwingelemente
- h, h₁-h₄: Höhen der Schwingelemente
- α₁, α₂: vorgebbare Winkel
- E₁-E₃: Schwingungsebenen

## Patentansprüche

1. Vorrichtung (1) zur Bestimmung und/oder Überwachung von zumindest zwei Prozessgrößen eines Mediums (2) in einem Behältnis (3), umfassend ein erstes (11a) und ein zweites Schwingelement (11b),
eine erste (12a) und eine zweite Antriebs-/Empfangseinheit (12b), und
eine Elektronik (6),
wobei die erste Antriebs-/Empfangseinheit (12a) dazu ausgestaltet ist, das erste Schwingelement (11a) mittels eines ersten elektrischen Anregesignals (U_{A1}) zu mechanischen Schwingungen anzuregen, und die mechanischen Schwingungen des ersten Schwingelements (11a) zu empfangen und in ein erstes elektrisches Empfangssignal (U_{E1}) umzuwandeln,
wobei die zweite Antriebs-/Empfangseinheit (12b) dazu ausgestaltet ist, das zweite Schwingelement (11b) mittels eines zweiten elektrischen Anregesignals (U_{A2}) zu mechanischen Schwingungen anzuregen, und die mechanischen Schwingungen des zweiten Schwingelements (11b) zu empfangen und in ein zweites elektrisches Empfangssignal (U_{E2}) umzuwandeln, und
wobei die Elektronik (6) dazu ausgestaltet ist, anhand des ersten Empfangssignals (U_{E1}) eine erste Prozessgröße und anhand des zweiten Empfangssignals (U_{E2}) eine zweite Prozessgröße zu bestimmen,
wobei das erste Schwingelement (11a) und/oder die erste Antriebs-/Empfangseinheit (12a) derart angeordnet und/oder ausgestaltet sind, dass das erste Schwingelement (11a) Schwingungen in einer ersten vorgebbaren, insbesondere gedachten, Ebene (E₁) ausführt,
wobei das zweite Schwingelement (11b) und/oder die zweite Antriebs-/Empfangseinheit (12b) derart angeordnet und/oder ausgestaltet sind, dass das zweite Schwingelement (11b) Schwingungen in einer zweiten vorgebbaren, insbesondere gedachten, Ebene (E₂) ausführt, und
wobei die erste (E₁) und die zweite Ebene (E₂) einen ersten vorgebbaren Winkel (α₁) zueinander aufweisen, oder
wobei das erste Schwingelement (1 1a) und/oder die erste Antriebs-/Empfangseinheit (12a) und das zweite Schwingelement (11b) und/oder die zweite Antriebs-/Empfangseinheit (12b) derart angeordnet und/oder ausgestaltet sind, dass das erste (11a) und das zweite Schwingelement (11b) Schwingungen in einer vorgebbaren, insbesondere gedachten, dritten Ebene (E₃) ausführen, wobei zumindest das erste (11a) und das zweite Schwingelement (11b) unterschiedlich ausgestaltet sind, oder die beiden Schwingelemente (11a, 11b) unterschiedlich relativ zu zumindest einer weiteren Komponente der Vorrichtung (1) angeordnet sind.

2. Vorrichtung (1) nach Anspruch 1,
wobei es sich bei der Prozessgröße um einen vorgebbaren Füllstand, die Dichte (ρ) oder die Viskosität (η) des Mediums (2) handelt.

3. Vorrichtung (1) nach zumindest einem der vorherigen Ansprüche,
wobei die Elektronik (6) dazu ausgestaltet ist, anhand des ersten (U_{E1}) und/oder zweiten Empfangssignals (U_{E2}) auf das Vorliegen eines Ansatzes an zumindest einem der Schwingelemente (11a-11d) zu schließen.

4. Vorrichtung (1) nach zumindest einem der vorherigen Ansprüche,
wobei zumindest das erste (11a) oder das zweite Schwingelement (11b) stabförmig ausgestaltet ist.

5. Vorrichtung (1) nach zumindest einem der vorherigen Ansprüche,
wobei zumindest an dem ersten (11a) oder zweiten Schwingelement (11b) endseitig ein Paddel angeformt ist.

6. Vorrichtung (1) nach zumindest einem der vorherigen Ansprüche,
wobei eine Grundfläche (G) zumindest des ersten (11a) oder zweiten Schwingelements (11b) senkrecht zu einer Längsachse (l) durch das Schwingelement (11a,11b) derart ausgestaltet ist, dass eine Grundseite (b) der Grundfläche (G) länger ist als eine Höhe (h) der Grundfläche (G).

7. Vorrichtung (1) nach Anspruch 6,
wobei die Grundfläche (G) rechteckig, rechteckig mit abgerundeten Ecken, oval oder elliptisch ausgestaltet ist.

8. Vorrichtung (1) nach Anspruch 1,
wobei der erste vorgebbare Winkel (α₁) 90° beträgt.

9. Vorrichtung (1) nach zumindest einem der vorherigen Ansprüche
wobei zumindest das erste (11a) oder zweite Schwingelement (11b) einen Hohlraum (14a, 14b) aufweist, und wobei zumindest die erste (12a) oder zweite Antriebs-/Empfangseinheit (12b) zumindest teilweise innerhalb des Hohlraums (14a, 14b) angeordnet ist.

10. Vorrichtung (1) nach zumindest einem der vorherigen Ansprüche
wobei zumindest das erste (11a) oder zweite Schwingelement (11b), vorzugsweise beide Schwingelemente (11a, 11b), an einem (13), vorzugsweise demselben, scheibenförmigen Element angebracht ist/sind.

11. Vorrichtung (1) nach zumindest einem der vorherigen Ansprüche,
umfassend zumindest vier Schwingelemente (11a-11d).

12. Vorrichtung (1) nach Anspruch 11,
wobei jeweils zwei Schwingelemente (11a-11d) gleich ausgestaltet und symmetrisch zueinander angeordnet sind, insbesondere wobei das erste (11a) und ein drittes Schwingelement (11c) bzw. das zweite (11b) und ein viertes Schwingelement (11d) gleich ausgestaltet und symmetrisch zueinander angeordnet sind.

## Claims

1. A device (1) for determining and/or monitoring at least two process variables of a medium (2) in a container (3), comprising
a first (11a) and a second oscillating element (11b),
a first (12a) and a second drive/receiving unit (12b), and electronics (6),
wherein the first drive/receiving unit (12a) is configured to cause the first oscillating element (11a) to mechanically oscillate by means of a first electrical excitation signal (UA1), and to receive the mechanical oscillations of the first oscillating element (11a) and convert these into a first electrical received signal (UE1),
wherein the second drive/receiving unit (12b) is configured to cause the second oscillating element (11b) to mechanically oscillate by means of a second electrical excitation signal (UA2), and to receive the mechanical oscillations of the second oscillating element (11b) and convert these into a second electrical received signal (UE2), and
wherein the electronics (6) are configured to determine a first process variable on the basis of the first received signal (UE1) and a second process variable on the basis of the second received signal (UE2),
wherein the first oscillating element (11a) and/or the first drive/receiving unit (12a) are arranged and/or configured in such a way that the first oscillating element (11a) generates oscillations in a first prespecifiable, in particular imaginary, plane (E1),
wherein the second oscillating element (11b) and/or the second drive/receiving unit (12b) are arranged and/or configured in such a way that the second oscillating element (11b) generates oscillations in a second prespecifiable, in particular imaginary, plane (E2),
wherein the first (E1) and the second planes (E2) are positioned at a first prespecifiable angle (a1) relative to each other, or
wherein the first oscillating element (11a) and/or the first drive/receiving unit (12a), and the second oscillating element (11b) and/or the second drive/receiving unit (12b) are arranged and/or configured in such a way that the first (11a) and the second oscillating elements (11b) generate oscillations in a prespecifiable, in particular imaginary, third plane (E3), wherein at least the first (11a) and the second oscillating elements (11b) have a different design, or the two oscillating elements (11a, 11b) are arranged differently relative to at least one other component of the device (1).

2. The device (1) as claimed in claim 1,
wherein the process variable is a prespecifiable fill level, the density (p) or the viscosity (η) of the medium (2).

3. The device (1) as claimed in at least one of the preceding claims,
wherein the electronics (6) are configured to draw conclusions on the presence of a deposit on at least one of the oscillating elements (11a-11d) on the basis of the first (UE1) and/or second received signal (UE2).

4. The device (1) as claimed in at least one of the preceding claims,
wherein at least the first (11a) or the second oscillating element (11b) is rod-shaped.

5. The device (1) as claimed in at least one of the preceding claims,
wherein a paddle is attached at least to the first (11a) or second oscillating element (11b) on the end side.

6. The device (1) as claimed in at least one of the preceding claims, wherein a base area (G) at least of the first (11a) or second oscillating element (11b) is formed by the oscillating element (11a, 11b) perpendicular to a longitudinal axis (1) in such a way that a base side (b) of the base area (G) is longer than a height (h) of the base area (G).

7. The device (1) as claimed in claim 6,
wherein the base area (G) is rectangular, with rounded corners, oval or elliptical.

8. The device (1) as claimed in claim 1,
wherein the first prespecifiable angle (a1) is 90°.

9. The device (1) as claimed in at least one of the preceding claims,
wherein at least the first (11a) or second oscillating element (11b) has a cavity (14a, 14b), and wherein at least the first (12a) or second drive/receiving unit (12b) is arranged at least partially within the cavity (14a, 14b).

10. The device (1) as claimed in at least one of the preceding claims,
wherein at least the first (11a) or second oscillating element (11b), preferably both oscillating elements (11a, 11b), is/are fitted to a disk-shaped element (13), preferably the same one.

11. The device (1) as claimed in at least one of the preceding claim, comprising at least four oscillating elements (11a-11d).

12. The device (1) as claimed in claim 11,
wherein two oscillating elements (11a-11d) are identical and arranged symmetrically relative to each other, in particular wherein the first (11a) and a third oscillating element (11c) or the second (11b) and a fourth oscillating element (11d) are identical and arranged symmetrically relative to each other.

## Revendications

1. Dispositif (1) destiné à la détermination et/ou à la surveillance d'au moins deux grandeurs de process d'un produit (2) dans un récipient (3), lequel dispositif comprend
un premier (11a) et un deuxième élément vibrant (11b),
une première (12a) et une deuxième unité d'entraînement / de réception (12b), et une électronique (6),
la première unité d'entraînement / de réception (12a) étant conçue pour exciter le premier élément vibrant (11a) en vibrations mécaniques au moyen d'un premier signal d'excitation électrique (U_{A1}), et pour recevoir les vibrations mécaniques du premier élément vibrant (11a) et les convertir en un premier signal électrique de réception (U_{E1}),
la deuxième unité d'entraînement / de réception (12b) étant conçue pour exciter le deuxième élément vibrant (11b) en vibrations mécaniques au moyen d'un deuxième signal d'excitation électrique (U_{A2}), et pour recevoir les vibrations mécaniques du deuxième élément vibrant (11b) et les convertir en un deuxième signal de réception électrique (U_{E2}), et
l'électronique (6) étant conçue pour déterminer une première grandeur de process à l'aide du premier signal de réception (U_{E1}) et une deuxième grandeur de process à l'aide du deuxième signal de réception (U_{E2}), le premier élément vibrant (11a) et/ou la première unité d'entraînement / de réception (12a) étant disposé(s) et/ou conçu(s) de telle sorte que le premier élément vibrant (11a) exécute des vibrations dans un premier plan (E₁) prédéfinissable, notamment imaginaire,
le deuxième élément vibrant (11b) et/ou la deuxième unité d'entraînement / de réception (12b) étant disposé(s) et/ou conçu(s) de telle sorte que le deuxième élément vibrant (11b) exécute des vibrations dans un deuxième plan (E₂) prédéfinissable, notamment imaginaire, et
le premier plan (E₁) et le deuxième plan (E₂) présentant un premier angle (α₁) prédéfinissable l'un par rapport à l'autre, ou
le premier élément vibrant (11a) et/ou la première unité d'entraînement / de réception (12a) et le deuxième élément vibrant (11b) et/ou la deuxième unité d'entraînement / de réception (12b) étant disposé(s) et/ou conçu(s) de telle sorte que le premier (11a) et le deuxième élément vibrant (11b) exécutent des vibrations dans un troisième plan (E₃) prédéfinissable, notamment imaginaire, au moins le premier (11a) et le deuxième élément vibrant (11b) étant conçus différemment, ou les deux éléments vibrants (11a, 11b) étant disposés différemment par rapport à au moins un autre composant du dispositif (1).

2. Dispositif (1) selon la revendication 1,
pour lequel il s'agit, concernant la grandeur de process, d'un niveau de remplissage prédéfinissable, de la densité (ρ) ou de la viscosité (η) du produit (2).

3. Dispositif (1) selon au moins l'une des revendications précédentes,
pour lequel l'électronique (6) est conçue pour conclure, à l'aide du premier (U_{E1}) et/ou du deuxième signal de réception (U_{E2}), à la présence d'un dépôt sur au moins l'un des éléments vibrants (11a-11d).

4. Dispositif (1) selon au moins l'une des revendications précédentes,
pour lequel au moins le premier (11a) ou le deuxième élément vibrant (11b) est conçu en forme de barre.

5. Dispositif (1) selon au moins l'une des revendications précédentes,
pour lequel une palette est formée à l'extrémité d'au moins le premier (11a) ou le deuxième élément vibrant (11b).

6. Dispositif (1) selon au moins l'une des revendications précédentes,
pour lequel une surface de base (G) d'au moins le premier (11a) ou le deuxième élément vibrant (11b) est conçue perpendiculairement à un axe longitudinal (I) à travers l'élément vibrant (11a, 11b) de telle sorte qu'un côté de base (b) de la surface de base (G) est plus long qu'une hauteur (h) de la surface de base (G).

7. Dispositif (1) selon la revendication 6,
pour lequel la surface de base (G) est rectangulaire, rectangulaire avec des coins arrondis, ovale ou elliptique.

8. Dispositif (1) selon la revendication 1,
pour lequel le premier angle (α₁) prédéfinissable est de 90°.

9. Dispositif (1) selon au moins l'une des revendications précédentes,
pour lequel au moins le premier (11a) ou le deuxième élément vibrant (11b) présente une cavité (14a, 14b), et
pour lequel au moins la première (12a) ou la deuxième unité d'entraînement / de réception (12b) est disposée au moins partiellement à l'intérieur de la cavité (14a, 14b).

10. Dispositif (1) selon au moins l'une des revendications précédentes,
pour lequel au moins le premier (11a) ou le deuxième élément vibrant (11b), de préférence les deux éléments vibrants (11a, 11b), est/sont monté(s) sur un élément (13), de préférence le même élément en forme de disque.

11. Dispositif (1) selon au moins l'une des revendications précédentes,
lequel dispositif comprend au moins quatre éléments vibrants (11a-11d).

12. Dispositif (1) selon la revendication 11,
pour lequel deux éléments vibrants (11a-11d) sont respectivement conçus de manière identique et disposés symétriquement l'un par rapport à l'autre, le premier (11a) et un troisième élément vibrant (11c) ou le deuxième (11b) et un quatrième élément vibrant (11d) étant notamment conçus de manière identique et disposés symétriquement l'un par rapport à l'autre.
